Europäisches Patentamt

European Patent Office

Office européen des brevets

(19)

(11) **EP 0 730 017 A2**

(12) **EUROPEAN PATENT APPLICATION**

(43) Date of publication:
04.09.1996 Bulletin 1996/36

(51) Int Cl.$^6$: **C09K 3/10**

(21) Application number: **96103166.3**

(22) Date of filing: **01.03.1996**

(84) Designated Contracting States:
**DE FR GB IT SE**

(30) Priority: **02.03.1995 US 397668**

(71) Applicant: **W.L. GORE & ASSOCIATES, INC.**
**Newark, Delaware 19714 (US)**

(72) Inventors:
• **Hutter Ross Kennedy**
**West Grove, PA 19390. (US)**
• **Spencer Mark Stephen**
**Phoenix , AZ 85044 (US)**

(74) Representative: **Klunker . Schmitt-Nilson . Hirsch**
**Winzererstrasse 106**
**80797 München (DE)**

(54) **Improved resilient sealing gasket**

(57)   The present invention is an improved resilient composite material for sealing gaps between the edge of an opening and a complementary sealing element, such as sealing an opening in an aircraft fuselage and the lid closing said opening, or sealing between aircraft fuselage and windows or windshields. The composite material comprises a substrate of a porous polymeric material having an open cell structure that is subsequently permeated with curable silicone or fluoroelastomer. By forming the composite as a sealing tape or bead, it may be readily installed in a wide variety of gasket applications. It is particularly suitable for highly demanding gasketing application, such as those encountered by high flying aircraft. For further improved properties, the composite material may further include a filling or plating of metal powder or other conductive filings so that a sealing tape is rendered thermally or electrically conductive.

Description

## BACKGROUND OF THE INVENTION

1. Field of the Invention

The present invention relates to sealant material used to seal openings. More particularly, the present invention is directed to advanced sealant materials suitable for highly demanding seal applications, such as those found in high flying aircrafts and the like.

2. Description of Related Art

A wide variety of materials are presently employed to seal gaps between complementary parts. Depending upon application, many different properties may be sought to effectuate an effective seal. Some common concerns include: the effectiveness of the seal; the consistency of the seal; ease in application and/or removal of the sealed complementary parts; the amount of stress-to-seal required; resilience of the sealant material; whether the sealant material is prone to "cold flow" or "creep" under extended compressive load; whether the sealant material can be reused repeatedly or must be replaced after each use; temperature and chemical compatibility of the sealant material; electrical and/or thermal conductive properties of the sealant material; cost of the sealant material and the labor to install and service the sealed opening; etc.

Invariably any sealant material that is employed for any given application is a compromise of these various properties. While many sealing applications are rather forgiving in the properties required, there are certain areas where the choice of a gasket or sealant material is crucial to effective operation as well as environmental health and safety. One such highly demanding application is the choice of sealant material used in aircrafts.

In order for the parts found in an aircraft fuselage (e.g., instruments, electrical connections and wires, and other equipment) to be accessible for servicing and repair work, openings are usually provided in the fuselage that are closed by tight fitting lids before the aircraft becomes operational. Airtight and watertight seals in these instances are often created by using "self-forming" sealant material wherein two components of the seal are mixed together and then applied very thinly to the sealing surface before the lid is secured in place.

To test for leaks, one must wait for the sealing compound to harden before performing a leak test on the aircraft using conventional technology. If leaks are detected, the lid must be removed, sealing compound must be removed, and the sealing process repeated. The sealing compound requires about twelve hours to harden. Thus, the sealing of openings is often very time consuming and is a particular annoyance because the quality of the seal may vary considerably.

In the case of seals of an aircraft's windshield or window, a discovered leak sometimes results in the breaking of the glass during the removal process. This obviously results in increased cost to the aircraft owner.

In addition, aircraft fuselage parts, such as instruments, electrical connections, and other equipment, must be protected from environmental hazards, such as an electromagnetic pulse (EMP), nuclear and electromagnetic pulse (NEMP), static dissipation, high and low temperatures, solvent attack, chemicals, corrosion, and out-gassing of residual unreacted components.

Currently existing gaskets and shielding materials are limited in their ability to handle the broad spectrum of problems listed above. Often with currently existing materials, the shielding effectiveness decreases over time due to electromagnetic pulsing and lightning strikes. Conductive gaskets containing a filler often flake and shift due to flexing and high vibration. Existing gaskets also crack and glaze when exposed to temperature extremes, ranging from - 450° F to 600° F.

One material that is quite effective at sealing joints and openings under highly demanding conditions is expanded polytetrafluoroethylene (PTFE). As is disclosed in United States Patent 3,953,566 to Gore, expanded PTFE is an excellent sealant material due to its inertness, conformability, strength, ease of installation, and non-hazardous by-products. A number of applications have been found for this material in the demanding environments of aircraft sealants, such as that disclosed in United States Patents 4,823,229 to Waterland, III, and 5,126,185 to Forrest et al.

A particularly successful sealant is that described in United States Patent 5,126,185 to Forrest et al. This material is an expanded polytetrafluoroethylene (PTFE) that has been molded into particular shapes suitable for sealing various openings found in aircrafts. This material has many unique properties that make it very suitable for such applications, including a wide operative temperature range, wide ranging chemical compatibility, good compressibility and conformability, ease of installation, and no hazardous waste by-products. Further, the material may be filled with electrical conductors to impart electrically conductive properties to the sealant. This material is commercially available from W. L. Gore & Associates, Inc., Newark, DE, under the trademark SKYFLEX.

Despite the excellent properties of this material, it is believed that further improvement in its performance may be possible. For example, expanded PTFE gasket material alone is not always as resilient as is desirable. One limitation in this regard is that this material tends to conform into its sealed orientation, making reuse or adjustment of its position limited after initial installation. Further, expanded PTFE material may have a tendency to "creep" under compressive load. This can result in diminished seal over time.

In light of the forgoing, it is a primary purpose of the present invention to provide an effective sealant material that ensures a very good seal between parts while being able to withstand highly demanding environmental conditions.

It is a further purpose of the present invention to provide a sealant material that includes a number of advanced operational properties, such as electrical and electromagnetic shielding.

These and other purposes of the present invention will become evident from review of the following specification.

## SUMMARY OF THE INVENTION

The present invention is an improved sealant material in the form of a gasket for sealing joints and gaps in openings of particularly demanding applications, such as in aircraft fuselage. The sealant material of the present invention comprises an open porous polymeric substrate partially or completely filled with a resilient material, such as curable silicone or fluorosilicone rubber.

Preferably, the present invention comprises a substrate of expanded polytetrafluoroethylene (PTFE) having a matrix of interconnecting fibrils and nodes. This material may be formed in virtually any shape, such as tubes, beads, rods, tape, or sheets. The substrate is then permeated with a curable rubber material in such a way as to envelope the fibrils and nodes of the polymeric matrix. By curing the rubber material within this structure, a highly resilient sealant material is created with significantly improved operational properties, including conformance, a wide range of bolt patterns, reusability, sealability over a wide range of expansion (e.g., during flight). Further, a number of advanced properties can be provided by adding other elements to this basic sealant material, such as thermally or electrically conductive elements.

## DESCRIPTION OF THE DRAWINGS

The operation of the present invention should become apparent from the following description when considered in conjunction with the accompanying drawings, in which:

Figure 1 is a scanning electron micrograph (SEM) of a composition of the present invention, enlarged 2,000 times, showing the polymeric nodes and fibrils structure coated with a low concentration of silicone material;
Figure 2 is an SEM of a composition of the present invention, enlarged 2,000 times, showing the polymeric nodes and fibrils of the structure coated with a medium concentration of silicone material;
Figure 3 is an SEM of a composition of the present invention, enlarged 2,000 times, showing the polymeric nodes and fibrils of the structure coated with a high concentration of silicone material;
Figure 4 is a three-quarter isometric view of one embodiment of a sealant tape of the present invention;
Figure 5 is a side cross-section view of a sealant tape of the present invention mounted in a gap between two complementary sealing surfaces;
Figure 6 is a side cross-section view of another embodiment of a sealant tape of the present invention;
Figure 7 is a three-quarter isometric view of a cylindrical rod sealant material of the present invention;
Figure 8 is a three-quarter isometric view of a rectangular sealant material of the present invention;
Figure 9 is a three-quarter isometric view of a tubular sealant material of the present invention;
Figure 10 is a three-quarter isometric view of a T-shaped sealant material of the present invention; and
Figure 11 is a three-quarter isometric view of an O-ring of sealant material of the present invention.

## DETAILED DESCRIPTION OF THE INVENTION

The present invention is an improved sealant material suitable for use in a wide variety of sealing applications where a gap around an opening must be secured against leakage. As such, the sealant material of the present invention may be used as a gasket in a wide variety of joints, as a weather stripping, as a sealant around openings in air or water craft, etc. Due the advanced properties of the material of the present invention, it is particularly suitable for use as a gasket used in highly demanding sealing environments, such as in sealing openings in high flying aircrafts, ships, submarines, and the like. It also has many uses in sealing the structures within an aircraft, such as the honeycomb floor and wall sections.

The sealant material of the present invention comprises a composite of a porous substrate of expanded polytetrafluoroethylene (PTFE) imbibed with a silicone elastomer material. This composite may be formed in the following manner.

First, an expanded PTFE material is produced, such as through the methods described in United States Patents 3,953,566 to Gore; 3,962,153 to Gore; 4,096,227 to Gore; and 4,187,390 to Gore, each incorporated by reference. For instance, an expanded PTFE tube may be formed from a mixture of PTFE resin (having a crystallinity of about 95% or above) and a liquid lubricant (e.g., a solvent of naphtha, white oil, mineral spirits, or the like). The mixture is thoroughly blended and then dried and formed into a pellet. The pellet is extruded into a tube shape through a ram-type extruder. Subsequently, the lubricant may then be removed through evaporation in an oven. The resulting tube material may be subjected to uniaxial or biaxial stretching at a temperature of less than 327°C to impart the desired amount of porosity and other properties to the tube. Stretching may be performed through one or more steps, at amounts varying from 1:1 or less up to 45:1. The resulting tube may then be subjected to a sintering temperature above 345°C (i.e., the melting temperature of PTFE) to amorphously lock the tube in its expanded orientation.

Alternatively, a flat tape or membrane may be formed through a similar procedure except that the dried pellet is extruded into a flat sheet. Once expanded and amorphously locked, this sheet may then be cut into any desired shape, such as a tape suitable for spiral or longitudinal ("cigarette") wrapping around a conductor.

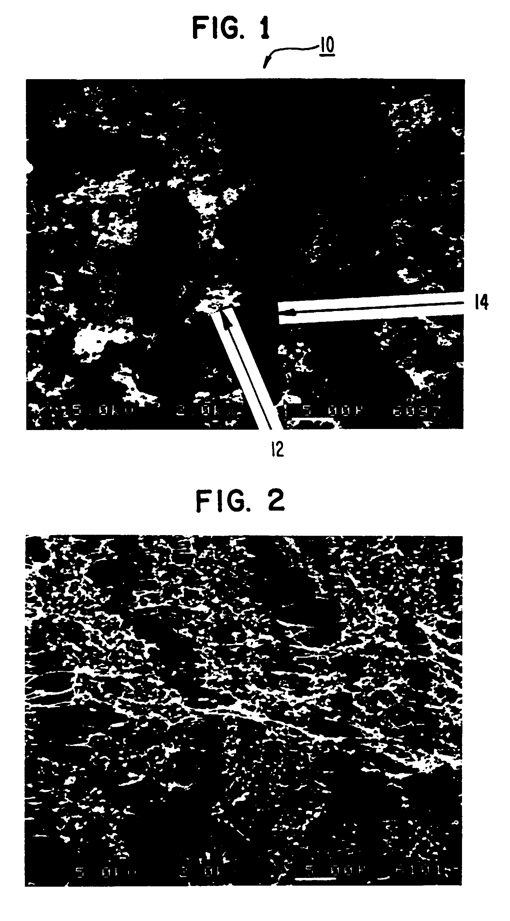

In both of these instances, a porous, expanded structure is obtained. As is shown in Figure 1, the expanded PTFE structure 10 comprises polymeric nodes 12 interconnected by fibrils 14. Typical properties of such a structure comprise an average fibril length between nodes of 0.05 to 30 $\mu$m (preferably 0.2 to 10 $\mu$m), and a void volume of 20 to 70% (preferably 30 to 50%). As should be evident from the following description, the precise properties and dimension of expanded PTFE structures employed with the present invention are a function of application. The general membrane properties suitable for use with the present invention should include medium to high porosity, and wettability by various solvents, such as methylene chloride, toluene, and/or acetone.

The fibril length of expanded PTFE that has been expanded in single direction is defined herein as the average of ten measurements between nodes connected by fibrils in the direction of expansion. The ten measurements are made on a representative micrograph of an expanded PTFE sample. The magnification of the micrograph should be sufficient to show at least five sequential fibrils within the length of the micrograph. Two parallel lines are drawn across the length of the micrograph so as to divide the image into three equal areas, with the lines being drawn in the direction of expansion and parallel to the direction of orientation of the fibrils. Measuring from left to right, five measurements of fibril length are made along the top line in the micrograph beginning with the first nodes to intersect the line near the left edge of the micrograph, and continuing with consecutive nodes intersecting the line. Five more measurements are made along the other line from right to left, beginning with the first node to intersect the line on the right side of the micrograph. The ten measurements obtained by this method are averaged to obtain the average fibril length of the material.

Substrate material made through one of the above described methods and suitable for use in the present invention is commercially available in a wide variety of forms from a number of sources, including under the trademark GORE-TEX® from W. L. Gore & Associates, Inc., Newark, DE.

Once suitable porous, expanded PTFE substrate material is obtained, the following processing is performed to produce the composite material of the present invention. First a solution is formed by dissolving a silicone, such as a fluoro-silicone, in an organic solvent. The ratio of silicone to solvent should be in the range of 4:1 to 1:10 parts by volume, and preferably is in the range of 3:1 to 1:3 parts by volume. The solution is formed through any conventional means, such as by blending in a mechanical mixer under ambient conditions.

The preferred solutions comprise a silicone material comprising a material soluble in one or more solvents capable of permeating and wetting out an expanded PTFE structure. The material preferably has a solids content of 95-100%, a specific gravity of between 0.95 to 1.5, and a viscosity between 300 and 150,000 centipoise. The material is preferably translucent in color. Further, the material preferably employs a one or two part cure system, ideally at an elevated temperature, to cure the liquid silicone into a rubber-like mass. It is particularly preferred to use a silicone with a platinum-type cure system that is activated at elevated temperatures to cross-link into a rubber-like substance.

It is suggested to select the silicone material from the group consisting of siloxane or polysiloxane having reactive groups, alkoxysilane or partially hydrolyzed forms thereof, and copolymeric siloxane having reactive groups. Known curing silicone rubber material compositions include normal temperature curing types, low temperature curing types, and high temperature curing types. Suitable silicones for use in the present invention include dimethylvinylated silica, trimethylated silica, methylhydrogen siloxane, dimethylhydrogen siloxane, dimethyl siloxane, dimethylvinyl-terminated siloxane, dimethylmethylphenylmethoxy silicone polymer, and methyltrimethoxysilane. Commercially available silicones for use with the present invention include Q3-6611, X1-4105, and Q1-4010, all available from Dow Corning, Inc., Midland, Michigan. Of particular interest in this application are fluorosilicones, such as that available from Shin-Etsu Silicones (Japan), Part Number FE 53.

Room temperature curing and high temperature curing compositions of silicone include two-pack types materials. Two-pack type materials deliver a silicone rubber having cross-linked structure by means of a reaction between siloxanes having reactive groups (e.g., SiOH, SiO-R (where R is an alkyl group), SiH, SiCH=CH$_2$ or the like) in the presence of a catalyst. The two-pack compositions are divided into condensation reaction types and addition reaction types.

The condensation reaction types include those employing: dehydration-condensation reactions between silanol and alkoxy siloxane; a de-alcoholation condensation reaction between silonal and alkoxy siloxane; and a dehydrogenation condensation reaction between SiH and silanol. The addition reaction types include those employing addition reaction between vinyl groups, alkyl groups, or other unsaturated groups and SiH.

A suitable curing catalyst is selected depending on the type of curing reaction desired. For example, metal, organic-metal salts, organic amines, quaternary ammonium salts, and the like are employed in reactions of condensation reactions types. Palladium or platinum back, platinum asbestos, chlorplatinic acid or other form of platinum are employed in reactions of addition-reaction types. The above-mentioned compositions may also contain other materials, such as silicone oil, $SiO_2$, or fumed silica as property altering agents.

The preferred solvent comprises a solvent that both actively dissolves the silicone and is readily absorbed into structure of the intended polymeric substrate. For use with a PTFE substrate structure, a halogenated solvent, such as methylene chloride, acetone, or toluene, is particularly useful, as are commercially available solvents NORPAR-12 and ISOPAR-C. While methylene chloride has produced the best results to date, health concerns surrounding the use of this solvent may be objectionable for some applications. Accordingly, other preferred solvents continue to be sought.

The presently preferred composition comprises a mixture of 10-75% by weight of Q1-4010 silicone elastomer and 25-90% methylene chloride, acetone, ISOPAR-C, or toluene solvent. This mixture is formed by stirring the solvent while adding the silicone elastomer at room temperature (about 22°C) until the mixture has achieved a homogenous color. With an acetone mixture, the mixture should be re-stirred prior to each use due to precipitation of materials.

Once the silicone/solvent composition is formed, it can then be applied to any suitable microporous membrane. The preferred membrane for use with the present invention comprises the porous expanded PTFE material described above. Another membrane material which may be suitable for use with the present invention may include expanded ultra-high molecular weight polyethylene.

The solution is applied to the porous PTFE material by spreading the composition evenly over the membrane and then allowing the composition to become absorbed therein. Preferably, the PTFE material is immersed within the solvent until it becomes saturated, such as by submerging the material in a bath of solution over a period of 1 to 5 minutes. The solution may be placed under reduced pressure, such as in a vacuum chamber, to facilitate complete filling of the porous polymeric substrate.

Once filled, the membrane and absorbed solution is exposed to an energy source, such as a heated oven set at 70 to 75°C or above, for a period of 2 to 5 minutes or more to evaporate away any solvent. Ideally, evaporation comprises employing an oven heated to 85°C or above and exposing the composition for at least 5 minutes. The evaporation of solvent can also be performed in one of the following manners: air drying for about a 5 hour period; or about 1 hour at about 50°C in an explosion-proof oven.

When produced in this manner, it has been found that the porous PTFE material will become thoroughly impregnated with the silicone between its top and bottom surfaces. When applied to a flat membrane by spreading on one side, the bottom surface of the membrane (i.e., the surface opposite the side where the composition is applied) tends to have a tacky feel to it that may be desirable if the membrane is to be used as an adhesive layer.

By contrast, with some applications the top surface of the membrane has been found to have a powder-like material on it. This is believed to be a coating of silicon dioxide found as a filler in some commercial silicone materials. This material may be left in place for ease in handling or may be removed through any suitable means, such as through use of a solvent and/or mechanical scraping. Different silicone mixtures, both with and without silicone dioxide filler, are described in the examples set forth herein.

After impregnation, the composite material may then be subjected to appropriate conditions to cure the silicone material. For a Q1-4010 type silicone of Dow Corning Company, a filled PTFE membrane can be cured by placing the composite material within an oven at about 110°C for about 30 minutes.

The goal of the present invention is to provide a complete overlay of silicone over the polymeric nodes and fibrils of the membrane. Depending upon the conditions employed, the complete impregnation of the membrane may comprise simply thinly or thickly covering the polymeric structure while leaving the microporous structure open to air permeation. Alternatively, the entire fibrillated interior of the membrane, including most or all of the porous structure therein, can be filled with the silicone.

Figure 2 shows the fibrillated PTFE structure, such as that shown in Figure 1, with a medium coating of silicone polymer coating both the nodes and fibril structure of the polymer to form the composite of the present invention. The material was the result of placing an expanded PTFE membrane in a solution of 50% by volume of Q1-4010 silicone and a 50% by volume of ISOPAR-C solvent for 1 minute. This filled material was then heated in an oven for 10 minutes at 110°C to achieve a final product.

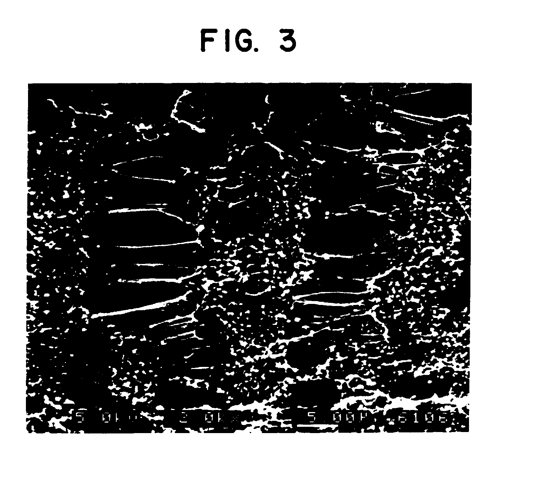

Figure 3 shows a fibrillated PTFE structure, such as that shown in Figure 1, with a heavy coating of silicone polymer coating both the nodes and fibril structure of the polymer to form the composite of the present invention. As can be seen, the node and fibril structure of this material is thoroughly loaded with silicone. The material was the result of placing an expanded PTFE membrane in a solution of 75% by volume of Q1-4010 silicone and a 25% by volume of ISOPAR-C solvent for 1 minute. This filled material was then heated in an oven for 10 minutes at 110°C to achieve a final product.

In either instance, the intent of the present invention is to produce a thoroughly impregnated composite membrane that has substantial elastomeric properties. In this respect, the degree of elasticity of the present invention can be measured in the following manner: a piece of treated and cured membrane is measured in length, stretched 2 times its length, released, and its new length re-measured. Resiliency is measured by compressing a given thickness of treated membrane to 50% its original height for 1 minute, releasing, and re-measuring its thickness.

To further aid in the impregnation process, the process of the present invention may be combined with other processes to achieve specific properties. For example, for some applications, such as use with very fine porous membranes, it may be desirable to impregnate the membrane with the silicone/solvent composition with the aid of a mechanical vacuum process. Other possible methods include use of mechanical pressure through either a pressure and/or vacuum process.

A further improvement of the sealant material of the present invention can be achieved by filling the expanded PTFE structure with particles or material that enhance one or more properties. For instance, the sealant material may include conductive shielding properties by including electrically conductive particles within the expanded PTFE. In a preferred embodiment, a sealant material including particles, fibers, or other fillers of one or more of the following: carbon, graphite, aluminum, silver plated aluminum, copper, copper alloy, iron, iron alloy, nickel, cobalt, gold, silver or silver plated copper, or the like. Filler content preferably comprises 5-85% by volume of the PTFE/filler composition. A preferable composition of PTFE filler for use as a sealant tape includes the filler comprising 30 to 50% by volume of the mixture. Material made in this manner will also provide shielding against electrical and electromagnetic effects.

Alternatively, the sealing gasket may be constructed of expanded PTFE that has been plated with a metal. Such a plating process is described in United States Patents Nos. 4,557,957 and 4,720,400 both to Manniso, incorporated by reference. Preferred metal plating materials include silver, silver-copper alloys, gold, cobalt, platinum and copper alloys and most preferably copper, nickel, and tin.

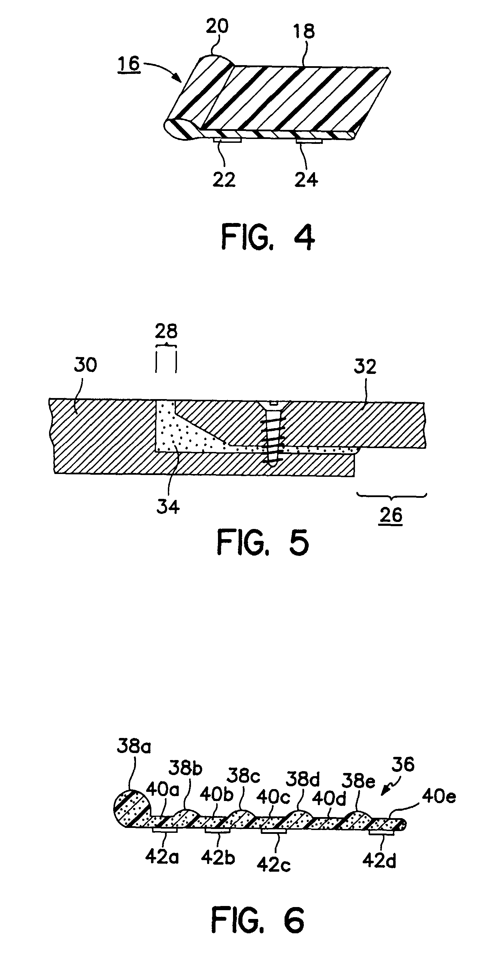

Once formed in this manner the composite of the present invention may then be formed into suitable shapes for use as a gasket or other form of sealant material. Figure 4 illustrates one embodiment of a sealant material 16 of the present invention. In this instance the sealant material 16 comprises a tape having a relatively wide flat portion 18 and an enlarged "bulb" portion 20. For use in sealing common gaps found in aircraft fuselage at access panels and the like, the dimensions of this sealant material comprises a flat portion 18 that is about 3-4 cm. wide and about between 0.3 and 1.5 mm thick (preferably 1 mm thick), and an enlarged bulb portion 20 having the same width or narrower as the flat portion and a thickness of between 1 to 5 mm, preferably 3.5 mm. To assist in mounting this material in a joint, the underside of the sealant material 16 may include an adhesive layer or one or more self-adhesive strips 22, 24 for sticking the sealant material to an area to be sealed. As conditions may require, the adhesive layer be made conductive to produce desired electrical properties.

The application of this material within an opening 26, such as that commonly found in an aircraft's fuselage, is illustrated in Figure 5. Around an opening 26 of this form, there is a gap 28 between an aircraft's fuselage 30 and a lid 32 sealing the opening 26. A sealant material 34 of the present invention is adapted to be inserted between the fuselage 30 and the lid 32 and conform to completely seal the gap 28 between the two. The lid 32 may be anchored in place through any conventional means, including with a series of screws 36, as shown.

By providing a sealant material 34 with the bulb shape illustrated in Figure 4, excessive space between the fuselage 30 and the lid 32, as shown, is completely filled. Due to the considerable compressibility of the sealant material of the present invention, the material will readily charge its shape to accommodate irregularities around the opening.

Figure 6 illustrates yet another embodiment of a sealant material 36 of the present invention. This embodiment the sealant material 36 comprises a tape having a plurality of flat portions 38a, 38b, 38c, 38d, 38e and a plurality of narrower enlarged bulb portions 40a, 40b, 40c, 40d, 40e. As shown, the bulb portions 40a-e may vary in size so that the sealant material may be fitted into gaps that may be present in various openings to be sealed. With this embodiment, any portion of the sealant material may be trimmed off to provide an exact fit. Again, adhesive, such as self-adhesive tapes 42a, 42c, 42c, 42d, may be included on one or both of the surfaces of the sealant material to assist holding it in place.

In each of these embodiments, it is particularly desirable to provide a sealant material comprising a composite of expanded PTFE and a silicone elastomer due to the various desirable properties of the composite, such as its tensile strength, compressibility, and resiliency. For use in sealing the gaps and joints between openings and lids in aircraft fuselages, PTFE is especially appropriate because of its high resistance to chemicals including aircraft fuel, kerosene, corrosive acids and oils typically used in the aircraft industry.

A sealant material made of a conductive expanded PTFE and elastomer, as previously described, has the same desirable properties of tensile strength, compressibility, and high resistance to chemicals. In addition, the sealing tape made of conductive PTFE enables it to perform well for most shielding applications.

One method of achieving an electrically conductive composite material is to employ an expanded PTFE material filled with conductive particles. Materials of this type are disclosed in United States Patents 4,985,296 to Mortimer, 5,126,185 to Forrest et al., and 5,286,568 to Bacino et al., each incorporated by reference. Similar material is sold by W. L. Gore & Associates, Inc., Newark, DE, under the designation GORE-TEX® EMI Sealing Gasket Tape. This material possesses a number of highly desirable properties, such as high resistance to vibration, capability of maintaining shielding effectiveness even after exposure to electromagnetic pulses (EMP) (e.g., exposures in the frequency range of 200 kilohertz to 18 gigahertz), and a capability of maintaining shielding effectiveness after exposure to nuclear electromagnetic pulses. A composite of the present invention may be readily produced from this material merely by subjecting the conductive expanded PTFE material to elastomer treatment as has been described herein.

Both the sealing tape and conductive sealing tape provide high quality resilient seals that enable an opening to be very readily sealed merely by mounting the sealant material within the gap to be sealed and torquing the components together. As compared with the lengthy procedures presently employed with aircraft sealants, the use of a sealant of the present invention represents a tremendous savings in time and labor. Other significant improvements realized by the present invention is that it is far more durable and effective at sealing joints under extreme environmental conditions than use of any presently known silicone material, and it has a much lower stress-to-seal than can be achieved with the use of pure expanded PTFE gasket materials.

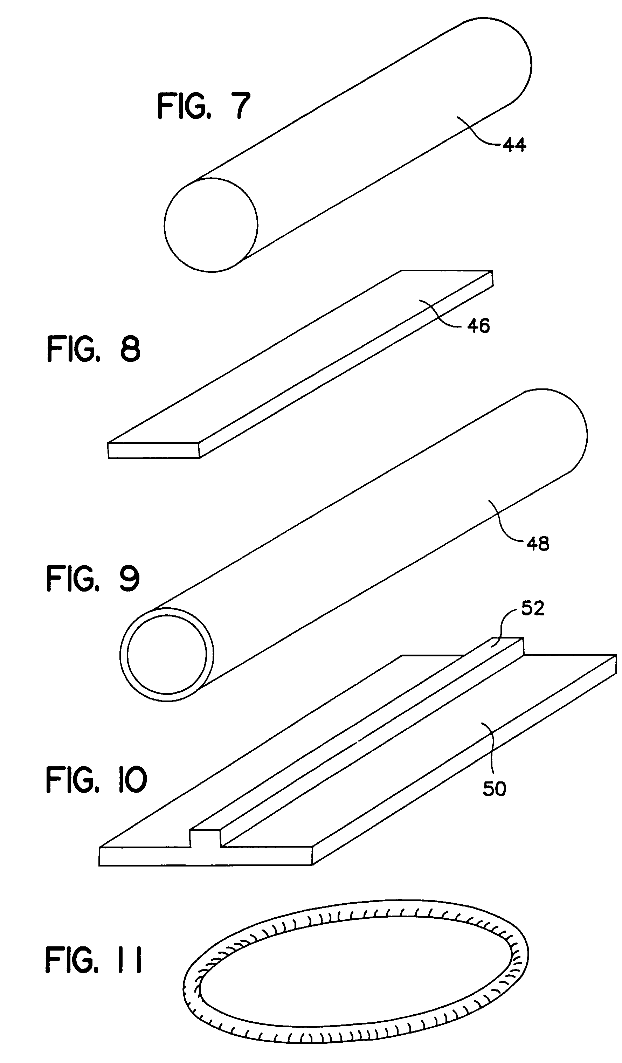

It should be evident from the above description that the sealant material of the present invention may be made in virtually any size and dimensions to suit particular sealing requirements. A few examples of these are shown in Figures 7 through 10. Figure 7 shows a cylindrical composite sealant material 44 of the present invention. Figure 8 shows a tape composite sealant material 46 of the present invention with an essentially rectangular cross-section. Figure 9 shows a tubular composite sealant material 48 of the present invention. Figure 10 shows a sealant material 50 of the present invention incorporating a ridge 52 along one surface to correspond to application-specific sealing requirements.

It is also contemplated by the present invention to produce O-rings and similar configurations from the material of the present invention to serve sealing requirements in applications requiring a continuous ring of sealing material.

Figure 11 shows a sealant material 54 of the present invention in the form of an O-ring.

Without intending to limit the scope of the present invention, the following examples illustrate how the present invention may be made and used:

### Example 1

A tape of PTFE having a fine porous structure, its profile having a relatively large (1.3" wide) flat portion and a narrower bulb portion (0.115") and several smaller bulbs running parallel along the wide flat portion was employed as the substrate in the present in this example. This material is of conventional known type, and is commercially available from W.L. Gore & Associates, Inc., Elkton, MD, under the trade name SKYFLEX® (part number GUA1001). This material may be manufactured, for example, in accordance with United States Patent 3,953,566 to Gore, incorporated by reference.

Briefly, this material may be produced in the following manner. A mixture of a PTFE resin having crystallinity of about 95% or above and a liquid lubricant of mineral spirits is extruded into a rectangular profile from an extrusion unit, and after either removing the liquid lubricant or leaving it, the resulting profile is subjected, in an unsintered state at 327°C or below, to uniaxial or biaxial stretching at a rate of, for example, 10% per second. If desired, the material may then be heat treated at a temperature at or above the melting point of the PTFE. The PTFE substrate material obtained in the manner has a fine porous structure in which many polymeric nodes are interconnected by fibrils.

The expanded PTFE material is then loaded with elastomer in accordance with the present invention in the following manner. First, 1 part Q1-4010 silicone from Dow Coming Company was dissolved in 3 parts of toluene solvent. Next, a length of the expanded PTFE substrate material was submersed in the solution until the solution penetrated the substrate. The substrate material was then removed from the solution and was wrapped onto a 16 inch diameter paper tube. The wrapped tube was then placed in an oven for 30 minutes at 110°C. The curable silicone rubber used in this example was a one part composition using a platinum type cure system that is activated by elevated temperature causing a cross linking of the silicone material into a rubber-like substance.

Samples of the sealant of the present invention made in accordance with this Example were tested to determine stress-to-seal and recoverability through (20) twenty consecutive and successful sealability tests. The testing was spread over (6) six weeks. Results were as follows:

|  | SKYFLEX® Joint Sealant | SKYFLEX® Joint Sealant with Silicone |
|---|---|---|
| Stress-to-seal | 500 lbs/in$^2$ | 500 lbs/in$^2$ |
|  |  |  |

(continued)

|  | SKYFLEX® Joint Sealant | SKYFLEX® Joint Sealant with Silicone |
|---|---|---|
| Rib Recovery | < 12% | 90-95% |

Samples of the above example were also soaked in toluene and diesel fuel for 72 hours. No strength loss or significant weight loss was observed.

In this example it was discovered that the amount of curable silicone rubber in the substrate material can dramatically alter the physical characteristics of the finished gasket material. This amount may be adjusted by varying the ratio of the amount of silicone rubber material to solvent in the range mentioned above. To produce a finished gasket material with porosity, limpness and overall soft or supple feel, a lower amount of silicone rubber is used. To produce a non porous and stiffer gasket, more silicone rubber is used in the solution. Tensile strength also tends to increase with the higher concentration of silicone rubber in the silicone rubber/solvent solution. Finished product stiffness may also be altered based upon the ratio of silicone to solvent used.

The above process may be altered by the addition of pressure or vacuum during the impregnation process.

**Example 2**

The variation of silicone load and its effect on the properties of the final material is demonstrated by the following Example. A tubular composite material of the present invention was produce in the following manner and was tested in the manner described below.

A dispersion of polytetrafluoroethylene was prepared in the following manner. A PTFE resin acquired from E. I. duPont de Nemours and Company was mixed with 17% by volume lubricant of ISOPAR-C. This mixture was compressed into a pellet at 200 psi. The pellet was then extruded through a ram-type extruder at 300 psi to form an extruded tube. The extruded tube was dried at about 300°C for about 5 seconds. The tube was then expanded 4:1 at a line speed of 24 feet/min. The expanded tube was then sintered at 395°C for 17 seconds. The resulting tube had a density of about 0.5 g/cc and a nominal wall thickness of about 0.030 inches.

A wire assembly was placed within the above described tube and the tube and wire assembly were submerged in a solution of silicone and solvent (ISOPAR-C) per the table below. One sample of each type of composite was obtained for testing. The seven samples are described as follows:

| Samples No. | % Loading of Silicone | Silicone Resin No. | P.R. No. |
|---|---|---|---|
| 1 | 25 | Q1-4010 | N/A |
| 2 | 50 | Q1-4010 | N/A |
| 3 | 75 | Q1-4010 | N/A |
| 4 | 25 | X1-4105 | N/A |
| 5 | 50 | X1-4105 | N/A |
| 6 | 100 | Q7-4750 | 83-W1036-04 |
| 7 | 0 | N/A | N/A |

Each of these samples was then tested using the following equipment:

Instron 4201 Universal Tester with 1000 lb. Tensile Load Cell
100 lb. Compression Load Cell
0.003" Radius, 0.250" Wide Blade Fixture
Delron Insulation Spacer
Short Detector
Teledyne Taber Model V-5 Stiffness Tester
90° Tik Tok Tester
Pelton-Crane Validator Plus Autoclave

The composites were evaluated using the following procedures:

1. The test samples were tested for stiffness using the Taber Model V-5 Stiffness Tester and following the manufacturers recommended procedure.

2. The test samples composites were removed, dimensions taken, and tensile strength testing performed using an INSTRON 4201 Universal Tensile Tester with the following procedure:

(a) Cutting the sample to be tested into 6 inch lengths and removing the sample core;

(b) Obtaining overall outside diameter (OD), wall thickness, and composite inside diameter (ID) by measurement of composite material;

(c) Setting-up an INSTRON 4201 tensile tester using the manufacturers recommended procedures with the 1000 lb. load cell and allowing it to stabilize;

(d) Setting the crosshead speed at 2 inches per minute and the sample clamps at 1 inch apart;

(e) Installing the sample to be tested into the clamps and pulling;

(f) Making several sample pulls, recording the "Peak" values for each pull, then averaging the values for an average peak force;

(g) Using the equation below, computing the average PSI for the sample being tested and recording:

$$\frac{\text{Avg. Peak}}{((D^2 - D\text{-}2W)^2/4)\pi} = \text{Avg. PSI}$$

3. The test sample composites were tested for cut-through resistance using the INSTRON 4201 Universal Tensile Tester and the following the Requesting & Performing Cable Crush Test Procedure, Document No. 06-00021-01, in the following manner:

Particular parameters:

100 lb. Compression Cell
0.05 in/min.
0.003" Radius, 0.250" Wide Blade Fixture

Procedures:

(a) Cutting the sample to be tested into 6 inch lengths and removing the sample core;

(b) Noting overall OD, wall thickness, and composite ID measured in previous test;

(c) Setting-up the INSTRON 4201 Tensile Tester using the manufacturers recommended procedures with the 100 lb. compression load cell and allowing to stabilize;

(d) Setting the crosshead speed at 0.05 inches per minute and installing a Delron spacer and the 0.003" radius blade fixture;

(e) Installing the sample to be tested onto the 0.003" radius, 0.250" wide blade fixture and attaching a short detector, red lead to the load cell and the black lead to the fixture;

(f) Making several sample compressions, stopping the crosshead when the short detector detects a short and recording the "Peak" value for each compression. Averaging the values for an average peak force and recording.

4. The test samples were installed on the 90° Tik Tok Tester and flexed following the Requesting & Performing Cable Flex Test Procedure, Document No. 06-00034-01, in the manner described below, to evaluate the composite material resistance to flexing. The set up for the test was as follows:

Mandrel OD - 0.320"
Flex Rate - 15 cycles per minute
Tension - 1 lb.
Cycles Completed 496,653
Sample evaluation - No failure of composites, no cracks, no splits, etc., all samples

The procedure for the test was as follows:

(a) The sample material was mounted in a Tik Tok Tester;

(b) The sample was then exposed to repeated 90° folds, in opposite directions, over the mandrel at the stated flex rate;

(c) The samples were visually evaluated upon completion of the designated number of cycles.

5. One sample of No. 5 was autoclaved using the Pelton-Crane Validator Plus Autoclave and following the manufacturers recommended procedures. The individual cycle definitions were as follows:

Temperature 270 - 274°F
Pressure 30 - 38 PSI
Duration 5 minutes

Tensile strength and cut-through tests were performed, as described above, after autoclaving to determine any material property changes.

6. Samples 6 & 7 are control samples, with No. 6 being a 100% silicone composite material and No. 7 being a conventional 100% expanded PTFE tube mounted as a composite jacket over a wire assembly.

7. The samples were tested for crush resistance in the following manner:

(a) A sample of cable was prepared for electronic monitoring, with all center conductors connected together and attached to approximately an 18 inch lead. All shields were connected together and were also attached to an 18 inch lead. The opposite end of the test sample was exposed and the wires separated to prevent accidental shorting;

(b) An INSTRON 4210 Universal Tensile Tester was employed having a 100 lb. compression load cell with a flat plate installed. A 0.003" radius Blade Fixture was installed on the Universal Tester;

(c) The leads from the test sample was attached to a SLAUGHTER Series 103/105-MP Hi-Pot Tester;

(d) The test sample was positioned over and perpendicular to the 0.003" radius blade. The blade was positioned at one end of the sample so as to allow it to work its way up the sample;

(e) The compression cell was positioned to just touch the test sample, with crosshead speed set at less than 1.0 inch per minute;

(f) The Hi-Pot tester was set at 500 V DC with a current limit of 10 mA;

(g) The Universal Tester compressions cycle was then initiated while watching for a short in the sample. When a short is indicated, readings were taken.

The following table summarizes testing results on samples produced above and tradition silicone composite over a multiconductor core of silver plated copper conductors.

| RATIO Si: SOLV | Si MATERIAL | TABER STIFFNESS (g/cm) | TENSILE STRENGTH (PSI) | CUT THROUGH (lbs) | POST AUTOCLAVE TENSILE (PSI) | POST AUTOCLAVE CUT THROUGH (lbs) |
|---|---|---|---|---|---|---|
| 1:3 | Q1-4010 | 66.7 | 7565 | 33.67 | N/A | N/A |
| 1:1 | Q1-4010 | 79.2 | 7577 | 34.45 | N/A | N/A |
| 3:1 | Q1-4010 | 89.2 | 8363 | 32.19 | N/A | N/A |
| 1:3 | X1-4105 | 71.7 | 7368 | 31.42 | N/A | N/A |
| 1:1 | X1-4105 | 89.2 | 5359 | 32.77 | 7783 | 42.0 |
| Si ONLY | SEE NOTE | 115.0 | 1385 | 22.45 | N/A | N/A |
| Note: This composite was a conventional extruded SILASTIC Q7-4750 liquid silicone resin compound available from Dow Coming Corp. | | | | | | |

The material made in accordance with this Example provided over 12 times the tensile strength of a conventional silicone composite. The following conclusions were reached with regard to the above testing:

Taber Stiffness Tests

The Taber Stiffness test is an indication of the flexibility of the test sample. The higher the Taber number, the stiffer the sample. The value is a relative reference in gauging stiffness of one test sample with another. Test sample No. 6 (100% silicone composite) data was obtained from test data taken from previous production lots. This is the value used in test for customer acceptance.

The test indicated a trend within the two resin types, with an increase in stiffness developing as the percent of loading increases. Samples Nos. 1, 2 & 3 (Q1-4010 resin) indicated a slightly higher level of stiffness at the same percent loading compared to the samples Nos. 4 & 5 (X1-4105 resin).

Comparing the samples to the control samples, all samples were more flexible than the silicone control and less flexible than the expanded PTFE jacketed control.

Tensile Strength Tests

The tensile strength test also indicated a similar trend as the Taber test illustrated but with one slight deviation. Samples Nos. 1, 2, & 3 (Q1-4010 resin) increased in tensile strength, but Sample No. 5 (X1-4105 resin) did not show the increase expected. The relationship between the control samples Nos. 6 & 7 was also slightly different, with the Sample No. 3 being higher than the Sample No. 7. The minimum value for test Sample No. 6 is 1200 PSI per the suppliers data sheet for the Q7-4750 material.

Cut-Through Tests

The cut-through test was performed using the 0.003" radius, 0.250" wide blade fixture at a crosshead speed of 0.05"/minute and recording the maximum force required to penetrate one thickness of the composite material. Tests conducted on different configurations indicated that the thickness of the sample had no effect on the maximum force required to penetrate the material, it only affected the time duration before the short was noted.

Flex Tests

The flex test results showed no failures. No cracks, splits, or wrinkles were noted. The only results noted was the normal composite discoloration found during all flex tests and this is attributed to the use of aluminum mandrels.

Autoclave Tests

The post autoclave tensile strength and cut-through tests were performed, as described above, on the only test sample that was autoclaved (Sample No. 5). The results indicated that the tensile strength and cut-through were increased due to autoclaving.

**Example 3**

Samples of conventional expanded PTFE aircraft joint sealant (SKYFLEX® joint sealant acquired from W. L. Gore & Associates, Inc., under the designations GUA1063 (no bulb) and GUA1001 (bulb)) were submerged into a bath containing 1 part Dow Corning Q1-4310 silicone and 3 parts ISOPAR-C solvent for a period of several minutes. The samples were then placed in an oven at 80°C to evaporate the solvent. Half of each sample was then removed and re-submerged in the above bath and again placed in an oven to evaporate the solvent. All samples were then wrapped onto a paper mandrel having a 16" diameter and clamped so as to restrain them from shrinking in their longitudinal axes. The samples were then placed in an oven at 125°C for 2 hours to cure the silicone rubber. These samples were then placed, along with the standard product, under mechanical testing. The results of this testing are summarized below.

Compressed and Recovered Thickness - (w/o large bulb)

| STRESS | SAMPLE A | | SAMPLE B | | SOP | |
|---|---|---|---|---|---|---|
| | Comps'd | Recv'd | Comps'd | Recv'd | Comps'd | Recv'd |
| 250 psi | .025" | .035" | .024" | .034" | .014" | .018" |
| 500 psi | .023" | .033" | .022" | .032" | .012" | .015" |
| 750 psi | .021" | .032" | .019" | .029" | .009" | .012" |
| 1000 psi | .02" | .032" | .017" | .028" | .009" | .011" |
| 1500 psi | .018" | .030" | .015" | .026" | .007" | .009" |

(continued)

| STRESS | SAMPLE A | | SAMPLE B | | SOP | |
|---|---|---|---|---|---|---|
| | Comps'd | Recv'd | Comps'd | Recv'd | Comps'd | Recv'd |
| Original Thickness | .038" | | .042" | | .041" | |

Compressed and Recovered Thickness - (with large bulb)

| STRESS | SAMPLE A | | SAMPLE B | | SOP | |
|---|---|---|---|---|---|---|
| | Comps'd | Recv'd | Comps'd | Recv'd | Comps'd | Recv'd |
| 250 psi | .060" | .084" | .051" | .068" | .030" | .035" |
| 500 psi | .050" | .078" | .046" | .063" | .025" | .029" |
| 750 psi | .045" | .076" | .043" | .060" | .021" | .024" |
| 1000 psi | .039" | .072" | .038" | .059" | .019" | .022" |
| 1500 psi | .035" | .070" | .033" | .055" | .016" | .019" |
| Original Thickness | .087" | | .083" | | .095" | |

These tests were performed in accordance with ASTM Standard F-145, "Standard Practice for Evaluating Flat-Faced Gasketed Joint Assemblies," incorporated by reference, with the following modifications:

1. Two 5 inch long samples were placed 3 inches apart on a ASTM F-37 Sealability (blind) Test Plate (32 RMS), incorporated by reference. Solder plugs were positioned about the test samples (approximately 3/8 inches apart), not through the samples as taught in ASTM Standard F-145.
2. A cover plate, matching the Test Plate, was positioned above the test samples and the entire assembly was placed into an ASTM Standard F-37 Sealability Test Rig so that load and force could be administered and monitored.
3. Each of the samples was tested, the rate of load to stress was 500 lbs/in$^2$ per 15 seconds.
4. Thickness dimensions were recorded before and after completion of testing. The data concerning recovered height and thickness was recorded after a delay of 1 minute from the time the compressive load/stress was removed.

## Example 4

In developing a process for producing resilient expanded PTFE gasketing materials it was discovered that the final density of the product could be controlled through application of pressure, a pressure differential (i.e., a pressure and/or vacuum) applied while a specimen of expanded PTFE is submerged in the elastomer solution and by tension applied to the specimen after the impregnation process and during the cure cycle.

The following describes this development: A 3/8" Gore-Tex joint sealant from W.L. Gore & Associates, Inc., Elkton, MD., was loaded with a solution of 1 part Q1-4010 silicone from Dow Corning Company dissolved in 3 parts toluene solvent. The solution was partially drawn into the joint sealant by capillary action and forced to completely permeate the joint sealant by use of vacuum as follows: A length of 3/8" joint sealant was placed into an open container having the silicone/solvent solution. The joint sealant floated on the surface of the solution.

The container was then placed under a vacuum bell jar and vacuum was applied until a gauge on the jar measured 28 inches of vacuum. During this process the solution boiled while the joint sealant continued to float on its surface. After 3 minutes the vacuum was quickly released from the jar. Immediately the specimen became translucent and sank to the bottom of the can. Vacuum was again applied. The specimen again floated to the surface and the solution again boiled. After 2 minutes, vacuum was again quickly released and again, the specimen sank to the bottom.

Upon removal of the specimen from the container, it was noted that the specimen had shrunk approximately 25% in its longitudinal axis. The specimen appeared somewhat translucent and was much denser than the original joint sealant. It was discovered that the joint sealant specimen could be stretched back to its original length at which time it became white in color, as it was originally, and became less dense as it appeared to draw air back into the pores that were being reopened in the stretching process.

After the solvent was evaporated from the specimen, it was placed into an oven at 140°C for 1 hour to cure the silicone. Upon removing the specimen from the oven it was found to have shrunk again in length by approximately 25% and was very dense, hard, and resilient both in the radial and the longitudinal axis.

A second sample was produced exactly as above, except the specimen was wrapped onto a cardboard mandrel while stretching and before being placed into the oven for cure. The specimen was clamped at either end so as to prevent longitudinal shrinkage during the cure process. Upon removal from the oven and the cardboard mandrel, this specimen was found to be very lofty (low density) similar to a foamed rubber material. It was also found to be very resilient in the radial axis while having little or no elongation or resilience longitudinally. It was theorized that the longitudinal shrinkage was due to the inability of the core of the joint sealant to quickly equalize its pressure with rapid external pressure changes. Thus, as the external pressure quickly rises, as in the quick release of the vacuum, the core remained under vacuum causing the expanded PTFE structure to collapse upon itself. In order to test this theory, another specimen was processed as the first specimen except that the vacuum was not released quickly but allowed to leak off over a 15 to 20 minute period. This sample exhibited little longitudinal shrinkage and was slightly higher in density than the samples.

Sample A: Sample A was produced by placing a specimen of 3/8" joint sealant into a solution of 1 part Dow Corning Q1-4010 and 3 parts ISOPAR-C solvent by volume. A container of solution and the specimen was placed into a vacuum jar, drawing a vacuum to 28 inches. The vacuum was then quickly released. The specimen was removed from the solution and was onto a cardboard roll with its ends clamped to prevent shrinkage while curing in an oven at 140° for one hour.

Sample B: For Sample B, a 1/2" diameter joint sealant was used and it was processed identically to Sample A, except the silicone to solvent ratio was 1:1 by volume.

Sample C: A length of 3/8" joint sealant the same as Sample A was again permeated with a solution of 1 part Q1-4010 and 3 parts ISOPAR-C solvent. In this example, however, the joint sealant was simply placed on the surface of the solution and allowed to absorb the solution through simple capillary action. This process was considered complete after the specimen sank to the bottom of the container and after an additional 10 minutes of soak time. This entire process took approximately 30 minutes. Upon removing the specimen from the solution, it was found to have a somewhat translucent color and to be denser while not showing any shrinkage in the longitudinal axis. The specimen was wrapped on a cardboard mandrel, clamped at each end, and placed in an oven as above for curing. The resulting product was no higher in density and appeared to have less consistent distribution of silicone.

Sample D: Sample D was a length of Sample C taken after curing and soaking a second time in a solution of 1 part Dow Corning Q1-4010 and 3 parts toluene. Soak time was approximately 10 minutes. The specimen was then placed a second time in the oven for cure. This specimen was very dense and similar in physical properties to Sample E.

Sample E: Sample E was processed by placing a specimen of 1/2" joint sealant into a container having a solution of 1 part Dow Corning Q1-4010 and 3 parts toluene and this container then being placed into a pressure vessel. The vessel was sealed and air pressure was applied through a port in the vessel. Pressure was applied and released several times as follows: 20 psi for 2 minutes, released; 20 psi for 2 minutes, released; 40 psi for 2 minutes, released; 50 psi for 5 minutes, released. The pressure vessel was then opened and the specimen was removed. The specimen did not shrink longitudinally and appeared very dense. Specimen was wrapped and fastened on the cardboard mandrel as above, and placed in the 140°C oven for 1 hour to cure. Resulting specimen was similar to Specimen D in physical properties.

The following is a summary of the resulting weight per foot of the above specimens:

| Sample | Size Inches | Initial grams/foot | Final grams/foot | Process |
|--------|-------------|--------------------|-------------------|---------|
| A | 3/8 | 6.9 | 10.56 | vacuum, stretch & clamp |
| B | 1/2 | 13.07 | 21.0 | vacuum, stretch & clamp |
| C | 3/8 | 6.03 | 10.36 | soak & clamp |
| D | 3/8 | 10.36 | 17.82 | double soak & clamp |
| E | 1/2 | 13.07 | 29.10 | pressure & clamp |

Of particular interest from the above samples was the lighter feeling more porous (foamed like) product resulting from the vacuum process of Samples A and B. It was observed that results with the soak-only method were not always consistent as can be seen by the weight of Sample C being less than Sample A. In order to improve this condition, a second group was produced using the vacuum process combined with the soak process of Sample C, above. As was learned earlier, this method does not cause the longitudinal shrinkage since the vacuum is leaked off over a longer period. In the following examples, this period was of approximately 30 to 45 minutes. The ratio of silicone to solvent used was 1:1 parts by volume and the solvent used was ISOPAR-C because of its lower health risks. The results are reflected in the table below. The vacuum/soaked samples in a 1:1 solution have higher densities (weight per foot) than the vacuum-only processed samples. It was also noted that these samples were very consistent in silicone distribution.

| Size | Initial grams/foot | Final grams/foot | Process |
|------|--------------------|------------------|---------|
| 3/8" | 6.230 | 13.094 | vacuum, stretch & clamp |
| 3/8" | 6.230 | 15.003 | vacuum/soak, stretch & clamp |
| 1/2" | 13.199 | 23.936 | vacuum, stretch & clamp |
| 1/2" | 13.199 | 33.682 | vacuum/soak, stretch & clamp |

The ability to control densities of the final product, as taught above, is unique and valuable since it allows the manufacture of both lower and higher stress-to-seal expanded PTFE sealants that can be used in a wider range of applications. This may be particularly valuable in areas such as plastic flanges or panels where the typically high stress-to-seal required for standard expanded PTFE sealants makes its use impractical. The following data shows the variations in stress-to-seal, resealability, etc., obtained through the various processes described above.

Sealability and Recovery testing was performed on the samples described above to determine their usefulness as a seal. Three control samples were used to show relative performance:

Sample F: Red Silicone Foam, acquired from McMaster-Carr Supply Co. of New Brunswick, N.J., under the designation of No. 8608K16.

Sample G: Full Density Red Silicone, acquired from McMaster-Carr Supply Co. of New Brunswick, N.J., under the designation of No. 8632K36.

Sample H: A 3/8" diameter GORE-TEX® Joint Sealant acquired from W. L. Gore & Associates, Inc., of Elkton, MD.

Sealability:

Test Procedure: - ASTM F-37 Method B is the general method used with the modifications called out in Section 7.2.2. A 12 inch long sample is used to form a circular seal which is then compressed between two platens of known surface roughness. Air pressure at 30 psig was used to internally pressurize the system and the load required to form a seal was measured.

On smooth surfaces (32 RMS) the siliconized joint sealant had stress-to-seal values from 900 psi to 1300 psi depending on the sample. This stress-to-seal increased to 1300 psi to 2300 psi after four reseal cycles. By way of comparison, full density skived PTFE has a stress-to-seal value of 1500 psi for the first cycle. The red silicone materials have lower stress-to-seal while J.S. joint sealant has much higher stress-to-seal.

**Sealability - 32 RMS Surface**

**Stress-to-seal - psi**

| Sample | Material | Test 1 | Test 2 | Test 3 | Test 4 |
|--------|----------|--------|--------|--------|--------|
| A | 3/8 1:3 4010 Vac | 900 | 1100 | 1100 | 1300 |
| B | 1/2 1:1 4010 vac | 992 | 1150 | 1400 | 1750 |
| C | 3/8 1:3 4010 soak only | 1333 | 1774 | 1900 | 2306 |
| D | 3/8 1:3 4010 Dbl soak | 1168 | 1513 | 1732 | 2037 |
| E | 1/2 Pressure 20,20,40,50 | 1221 | 1677 | 1800 | 1978 |
| F | Red silicone foam | 500 | 600 | 700 | 950 |
| G | Red silicone full density | 500 | 800 | 1000 | 1250 |
| H | 3/8 J.S. joint sealant | 2500 | 3000 | 3760 | 4735 |

On rough surfaces (500 RMS) the stress-to-seal for the siliconized materials is:

| Sample | Material | Stress (psi) |
|--------|----------|--------------|
| A | 3/8 1:3 4010 vac | 1500 |
| C | 3/8 1:3 4010 soak | 1100 |
| D | 3/8 1:30 4010 dbl soak | 1250 |
| G | Red silicone full Density | 500 |

J.S. joint sealant stress-to-seal will increase to 3000 psi while full density materials will range from 4500 psi to 6000 psi on these rough surfaces.

On smooth surfaces, the high stress-to-seal J.S. joint sealant is consistent with its porous nature. The smooth surface requires minimal force to displace material into surface irregularities, but the material is never densified and leakage occurs through the pores. On a rough surface, the full density materials require a higher stress to force material into the irregularities than the more compliant joint sealant material, but the joint sealant still needs to be densified. Therefore, the stress-to-seal is higher for these full density materials than standard GORE-TEX® joint sealant product.

The above results for the siliconized material would suggest that the silicone is closing off the porosity of the expanded PTFE resulting in a lower stress-to-seal in all instances.

All of the materials tested showed an increase in stress-to-seal with reuse.

Recovery:

Test Procedure: ASTM F-145 test procedure was used with the following modifications:

1. Two 5" long samples were placed 3" apart on a ASTM F-37 sealability test plate with a 32 RMS surface finish;
2. Solder plugs were placed around the test sample;
3. A 32 RMS cover plate was positioned above the test samples and the entire assembly was placed into an ASTM F-37 sealability test rig;
4. Load was applied at the rate of 500 psi/15 seconds.

The recovered height is reported as the sample height after the load was removed divided by the original sample height, multiplied by 100.

**Recovered Height vs. Applied Stress for Various Materials**

| Sample | A | B | C | D | E | F | G | H |
|---|---|---|---|---|---|---|---|---|
| Stress | 3/8 1:3 4010 | 1/21:14010 | 3/81:34010 | 3/81:34010 | 1/2 Press | Red Silicone | Red Silicone | 3/8 J.S. |
| (psi) | Vac | Vac | Soak Only | Dbl Soak | 20,20,40,50 | Foam | Full Density | Joint Slnt |
| 500 | 66.8% | 79.6% | 59.4% | 83.2% | 87.6% | 95.3% | 98.8% | 16.7% |
| 1000 | 48.9% | 55.9% | 54.2% | 62.3% | 83.5% | 93.1% | 97.5% | 13.7% |
| 1500 | 47.2% | 48.7% | 45.2% | 49.7% | 77.1% | 90.6% | 96.3% | 12% |
| 2000 | 40.2% | 41% | 40.6% | 43.9% | 67% | 87.6% | 95.4% | 10.5% |

## Example 5

A fluoroelastomer/expanded PTFE composite was made by dip impregnation. PELMOR PLV 2000 fluoroelastomer dissolved in MEK, available from Pelmor Laboratories Inc., Newton, Pennsylvania, was used. The 20% solids solution in MEK was mixed with Accelerator #4 in the proportions of 44:1 by weight. This was allowed to stand for 10 minutes before impregnation.

The expanded PTFE structure was made by layering 15 plies of a 0.0040 to 0.0042 inch thick membrane having an original density of 0.17 to 0.20 g/cc. This structure was sintered together at 368°C for 30 minutes.

The composites were made by dipping nominally 4.375" x 0.5" x 0.040" expanded PTFE strips in the fluoroelastomer solution. Each sample was dipped for 1 minute of immersion time per dip. Fluoroelastomer went completely through the thickness of the sample as evidenced by a color change from white to black.

The composite was cured by allowing it to air dry for 3 hours. It was then oven cured at 160°C for 20 minutes. The following table shows the density changes and approximate volume percentages of material in the composites.

| Sample # | Number of Dips | Calculated Density | Approx. Vol % |
|---|---|---|---|
| 1 | 0 | 0.35 g/cc | 83% air<br>17% PTFE |
| 2 | 1 | 0.49 g/cc | 75% air<br>17% PTFE<br>8% elastomer |
| 3 | 2 | 0.69 g/cc | 65% air<br>17% PTFE<br>18% elastomer |

## Example 6

A 3/8 inch diameter sample of expanded PTFE rod, having a density of 0.25 to 0.35 g/cc, used as joint sealant and commercially available from W. L. Gore & Associates, Inc., Elkton, MD, was placed into a container of PELMOR PLV 2000 fluoroelastomer per above. The surface of the sample expanded PTFE rod immediately turned dark in color as it absorbed the solution. This container was placed into a vacuum jar and vacuum was applied until the gauge on the jar read 28 inches of mercury. Due to rapid boiling generated at this level of vacuum, the vacuum had to be released to 24 inches of mercury and then brought back to 28 inches several times. When vacuum was released and the container was removed from the vacuum jar, and the sample expanded PTFE rod was removed from the solution. The sample shrank only slightly in length but was stretched approximately 0.2 inches back to its original length and allowed to dry for 48 hours. Upon inspection, it was found that this sample had only a surface penetration of approximately 0.015" to 0.020" of fluorocarbon material and did not gain any resilience or elastomeric properties. This is believed to be due to the limited penetration. The limited penetration is believed to be due to the particle size of one of the components of PLV2000 and most likely the carbon black used to color and to enhance the physical properties of the fluorocarbon.

## Example 7

A 0.003 inch thick membrane of expanded PTFE having a density of 0.25 to 0.35 g/cc and manufactured by W. L. Gore & Associates, Inc., under the part number CH581-2387 was also treated with PLV2000 as follows. The membrane was placed onto a nonstick coated metal sheet and the PLV2000 was poured onto its surface and spread evenly across the membrane. The fluorocarbon solution quickly and completely wicked through the membrane. The membrane was patted dry with paper towels and left to dry for 48 hours. Upon inspection, the membrane was found to be black in color through its cross section and did have improved elastic properties.

## Example 8

A 0.003 inch thick membrane of expanded PTFE having a density of 0.656 g/cc and manufactured by W. L. Gore & Associates, Inc. was treated as Example 7 above. In this example the fluorocarbon solution merely coated the side to which it was applied and only slightly penetrated the expanded PTFE structure. This is believed to be because of the relatively high density, and thus small pore size, of this membrane being too restricted to allow permeation of the larger particles within the fluorocarbon solution.

The following table summarizes the weight gain, application method and comments on the above examples.

## Table

| Example | Material | Part No. | Density g/cc | DIM-X MM | DIM-Y MM | DIM-Z MM | Length inches | Weight grams | Treat Material | Ratio |
|---|---|---|---|---|---|---|---|---|---|---|
| 6 | 3/8 Joint seal | | 0.25-0.30 | N/A | N/A | N/A | 7.25 | 4.8777 | PLV2000 Viton | N/A |
| 7 | 0.003" film | CH581-2387 | 0.25-0.30 | 203.1 | 139.6 | 0.0001 | | 1.7263 | PLV2000 Viton | N/A |
| 8 | 0.003" Tex-U tape | 11487NA | 0.656 | 76.14 | 165 | 0.0001 | 6.5 | 0.5797 | PLV2000 Viton | N/A |
| | | | | | | | | | | |
| | 8mm tube | S0808 | N/A | N/A | N/A | N/A | 6 | 3.2714 | PLV2000 Viton | N/A |
| | 6mm tube | V06090L | N/A | N/A | N/A | N/A | 6 | 1.1325 | PLV2000 Viton | N/A |
| | 6mm tube | V06090L | N/A | N/A | N/A | N/A | 6 | 1.1355 | PLV2000 Viton | N/A |

## Table (Continued)

| Example | Weight grams | % Change weight | Process | Comments |
|---|---|---|---|---|
| 6 | 6.3124 | 29% | Soak/Vac | Limited Penet. 0.025" Deep |
| 7 | 3.3633 | 95% | Soak | Complete Penetration |
| 8 | 1.2024 | 107% | Soak | No Penetration, coated only |
| | | | | |
| | 4.4809 | 37% | Soak | Outside only dip 65% penet. |
| | 1.5107 | 33% | Soak | Outside only dip 65% penet. |
| | 1.8048 | 59% | Soak | Inside only fill 85% penet. |

As can be seen by the above examples, silicone is only one of many possible elastomer materials which will permeate an expanded PTFE structure in accordance with the present invention in order to provide elastic properties to said structure and render it usable as a gasket or sealing material. Also various combinations may be used. For example, silicone may be used to provide overall elastic properties while fluorocarbon or other more chemically resistant materials may be used as a final coating of an article manufactured according to the methods taught in this disclosure.

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1. A gasket for sealing a gap around an opening comprising

   a polymeric material having a thickness of at least 0.5 mm and including a microporous structure comprising polymeric nodes interconnected by fibrils extending between a top and a bottom surface; and
   an elastomer filler selected from silicone or fluoroelastomer that fully envelops the nodes and fibril structure between the top and bottom surfaces to seal the microporous structure and render it liquid impermeable;

   wherein a sealant material is produced that is both resilient and resistant to chemical attack.

2. The gasket of claim 1 wherein the polymeric material comprises expanded polytetrafluoroethylene (PTFE).

3. The gasket of claim 1 wherein the sealant material includes an electrically conductive material incorporate therein to render the sealant material conductive.

4. The gasket of claim 4 wherein the conductive material is selected from the group consisting of carbon, graphite, aluminum, silver-plated aluminum, copper, copper alloy, iron, iron alloy, nickel, cobalt, gold, silver and silver plated copper.

5. The gasket of claim 1 wherein the sealant material is capable of withstanding compression perpendicular to its longitudinal axis of 75 percent with a rebound of at least 50 percent to its original dimensions.

6. The gasket of claim 1 wherein the sealant material is capable of withstanding repeated exposure to temperatures in excess of 200°C without significant degradation.

7. The gasket of claim 6 wherein the sealant material is capable of withstanding repeated exposure to harsh chemicals without significant degradation of the sealant material.

8. The gasket of claim 1 wherein the silicone is selected from the group consisting of dimethylvinylated silica, trimethylated silica, methylhydrogen siloxane, dimethylhydrogen siloxane, dimethyl siloxane, dimethylvinyl-terminated siloxane, dimethylmethylphenylmethoxy silicone polymer, and methyltrimethoxysilane.

9. A method for producing a sealant material that comprises:

   providing a microporous substrate of polytetrafluoroethylene (PTFE) material comprising;
   providing a silicone elastomer;
   mixing the silicone elastomer with a solvent to form a composition that will freely penetrate the PTFE material upon contact;
   applying the composition to the PTFE material so as to cause the composition to envelop the microporous structure of the PTFE material;
   removing the solvent from the membrane to leave a composite sealant material; and
   installing the sealant material within a gap around an opening to seal the opening against leakage.

10. The method of claim 9 that further comprises

    providing a solvent selected from the group consisting of methylene chloride, toluene, ISOPAR-C, and acetone;
    mixing the silicone and solvent in a proportion of 0.1:1 to 3:1 by weight.

11. The method of claim 9 that further comprises

    forming the composite sealant material into a tape; and
    sealing the opening by installing the tape around the opening.

12. The method of claim 11 that further comprises

    providing an adhesive on at least one face of the tape; and
    employing the adhesive to assist in centering the sealant material during installation.

**13.** The method of claim 9 that further comprises
applying the composition to the PTFE material by submerging the PTFE material in the composition.

**14.** A method for producing an improved sealant material which comprises:

providing a polymer membrane including a microporous structure;
providing a solution of silicone and solvent mixed to form a liquid composition that will freely penetrate the microporous structure of the membrane;
coating the membrane with the composition so as to allow the composition to impregnate the microporous structure completely;
subjecting the impregnated membrane to an energy source to remove the solvent and cure the silicone within the membrane to form a silicone impregnated membrane.

**15.** A method of producing an improved sealant material which comprises:

providing a polymer membrane including a microporous structure;
providing an elastomer solution;
introducing said solution into the microporous structure with the aid of a pressure differential;
varying said pressure differential so as to regulate the density of the sealant material;
introducing force to the item that is sufficient to remove shrinkage which may have occurred during application of the pressure differential and maintaining said pressure until the elastomer solution is cured; and
curing the elastomeric solution within the membrane.

**16.** The method of claim 15 that further comprises providing a pressure differential in the form of a vacuum.

## FIG. 1

## FIG. 2

FIG. 3

FIG. 4

FIG. 5

FIG. 6

FIG. 7

44

FIG. 8

46

FIG. 9

48

FIG. 10

52

50

FIG. 11